# EUROPÄISCHE PATENTSCHRIFT

(11) **EP 1 167 460 B1**
(45) Veröffentlichungstag und Bekanntmachung des Hinweises auf die Patenterteilung: **06.05.2004**
(21) Anmeldenummer: 01114630.5
(22) Anmeldetag: 19.06.2001
(51) Int. Cl.: C09B 43/32, C09B 43/38, B01J 19/00

(54) **Verfahren zur Herstellung von Disazokondensationspigmenten in Mikroreaktoren**
Process for the preparation of disazo condensation pigments in microreactors
Procédé pour la préparation de pigments disazoiques de condensation dans des microréacteurs

(30) Priorität: 01.07.2000 DE 10032019
(43) Veröffentlichungstag der Anmeldung: 02.01.2002
(73) Patentinhaber: Clariant Finance (BVI) Limited, Road Town, Tortola (VG)
(72) Erfinder: Nickel, Uwe, Dr., 61352 Bad Homburg (DE); Kund, Klaus, Dr., 65558 Langenscheid (DE); Alfter, Frank, Dr., 65812 Bad Soden (DE)
(74) Vertreter: Hütter, Klaus, Dr.

(56) Entgegenhaltungen:
- DD-A- 246 257
- DE-A- 1 544 453
- DE-A- 1 644 117
- DE-A- 3 926 466
- US-A- 5 534 328
- DATABASE WPI Week 199040, Derwent Publications Ltd., London, GB; Class A89, AN 1990-300329 'Yellow toner for colour electrography...' & JP 2 210 360 A (MITSUBISHI KASEI CORP) 21 August 1990
- DATABASE WPI Week 199913, Derwent Publications Ltd., London, GB; Class A97, AN 1999-148761 'Ink jet printer ink with stable dye dispersion...' & JP 11 012 508 A (FUJI SHIKISO KK) 19 Januar 1999
- DATABASE WPI Week 198544, Derwent Publications Ltd., London, GB; Class A97, AN 1985-273785 'Ink having metallinc colour tune...' & JP 60 186 573 A (MITSUBISHI PENCIL CO) 24 September 1985
- DATABASE WPI Week 199944, Derwent Publications Ltd., London, GB; Class A60, AN 1999-522909 'New sulphonaminated azo compounds...' & JP 11 228 858 A (SUMITOMO CHEM CO LTD) 24 August 1999

## Beschreibung

Die vorliegende Erfindung liegt auf dem Gebiet der Disazokondensationspigmente. Bei der Gruppe der Disazokondensationspigmente handelt es sich um Verbindungen, die aus zwei Monoazoverbindungen aufgebaut sind, die über eine aromatische Diaminocarbonamid-Brücke verknüpft sind.
Disazokondensationspigmente werden technisch konventionell in einem mehrstufigen Batch-Verfahren in Reaktionskesseln durch Zusammenmischen der Reaktionskomponenten je nach Reaktionsschritt in wässriger Phase oder in Lösungsmitteln hergestellt.

Ein anderes Verfahren ist das kontinuierliche Mischen der Suspensionen oder Lösungen von wässrig-alkalischer Kupplungskomponente mit wässrig saurer Diazokomponente in Mischdüsen (DE-OS 1 644 117, DE-OS 1 544 453) als abschließende Reaktionsstufe.

Die prinzipiellen Verfahrensschritte bei der Herstellung von Disazokondensationspigmenten sind dabei die Diazotierung aromatischer oder heteroaromatischer Amine, die Azokupplungsreaktion und, als Charakteristikum dieser Pigmentklasse, die Säurechloridbildung von aromatischen Mono- oder Dicarbonsäuren mit nachfolgender Kondensation mit aromatischen Mono- oder Diaminen. Die Reihenfolge der Reaktionsschritte kann dabei unterschiedlich sein: So kann z.B. durch Kupplung aus einem diazotierten aromatischen Amin und 2-Hydroxynaphthalin-3-carbonsäure eine Monoazocarbonsäure erhalten werden, die dann, nach Umsetzung zum Carbonsäurechlorid, mit einem Diamin kondensiert wird. Oder man erhält durch Kupplung von zwei Äquivalenten einer diazotierten aromatischen Aminocarbonsäure mit einem Biskuppler eine Disazodicarbonsäure, die nach Umsetzung zum Dicarbonsäurechlorid mit zwei Äquivalenten eines aromatischen Amins kondensiert wird. Eine weitere Variante ist die Kondensation zweier Äquivalente 2-Hydroxynaphthalin-3-carbonsäurechlorid mit einem aromatischen Diamin und abschließende Kupplung mit diazotiertem Amin zu dem Disazokondensationspigment.
Bei Disazokondensationspigmenten kann eine Nachbehandlung in Wasser/Lösungsmitteln zur Erzielung der gewünschten Kristalleigenschaften erforderlich sein.

In allen diesen Verfahren ist die Kontrolle der Verfahrensparameter, wie Temperatur, Zeit und insbesondere die Durchmischung, wesentlich für die Reinheit, Qualität und die Qualitätskonstanz der Produkte. Eine Schwierigkeit bei diesen Verfahren ist das scale-up von neuen Produkten aus dem Labormaßstab in den großtechnischen Maßstab.

Der vorliegenden Erfindung lag daher die Aufgabe zugrunde, ein Verfahren zur Herstellung von Disazokondensationspigmenten zu finden, bei dem sich die Verfahrensparameter optimal beherrschen lassen, eine verbesserte Durchmischung der Reaktanden gegeben ist und das scale-up einfach zu bewerkstelligen ist.

Aus der DD 246 257 A1 ist bekannt, dass miniaturisierte verfahrenstechnische Apparaturen für chemische Reaktionen eingesetzt werden können, bei denen die zu behandelnden Stoffe nur in geringen Mengen zur Verfügung stehen oder diese Stoffe sehr teuer sind, so dass man sich große Totvolumina in den verfahrenstechnischen Apparaturen nicht leisten kann.
In der DE 3 926 466 C2 werden chemische Reaktionen von zwei chemischen Stoffen mit starker Wärmetönung in einem Mikroreaktor beschrieben.

Mikroreaktoren zur Durchführung chemischer Reaktionen sind aus Stapeln von strukturierten Platten aufgebaut und in der DE 39 26 466 C2 und US 5,534,328 beschrieben. In der US 5,811,062 wird darauf hingewiesen, dass Mikrokanal-Reaktoren vorzugsweise für Reaktionen benutzt werden, die keine Materialien oder Feststoffe benötigen oder produzieren, die die Mikrokanäle verstopfen können.

Es wurde nun gefunden, dass sich Mikroreaktoren überraschenderweise zur Durchführung der Diazotierung, der Azokupplung, der Carbonsäurechloridbildung und der Kondensationsreaktion des Carbonsäurechlorids mit einem Amin zur Herstellung von Disazokondensationspigmenten eignen.

Die verwendete Bezeichnung Mikroreaktor steht dabei stellvertretend für Mikro- und Minireaktoren, die sich nur aufgrund der Dimensionen und Aufbau der Reaktionskanalstrukturen unterscheiden.

Beispielsweise können Mikroreaktoren, wie sie aus den angeführten Schriften oder aus Veröffentlichungen des Instituts für Mikrotechnik Mainz GmbH, Deutschland, bekannt sind, oder auch kommerziell erhältliche Mikroreaktoren, wie beispielsweise der auf Cytos™ basierende Selecto™ der Firma Cellular Process Chemistry GmbH, Frankfurt/Main, eingesetzt werden.

Gegenstand der Erfindung ist daher ein Verfahren zur Herstellung von Disazokondensationspigmenten durch Diazotierung eines aromatischen Amins, Azokupplung mit einer Kupplungskomponente zu einer Azocarbonsäure oder Azodicarbonsäure, Bildung eines Azocarbonsäurechlorids oder Azodicarbonsäuredichlorids, und Kondensation des Azocarbonsäurechlorids mit einem aromatischen Diamin oder des Azodicarbonsäuredichlorids mit einem aromatischen Amin, dadurch gekennzeichnet, dass man die Säurechloridbildung und/oder die Kondensation, und ggf. die Diazotierung und ggf. die Azokupplung, in einem Mikroreaktor durchführt.

Zweckmäßigerweise wird dabei so verfahren, dass man vorzugsweise die in einem Lösemittel gelösten oder suspendierten Ausgangsprodukte kontinuierlich und vorzugsweise in äquivalenten oder ggf. zweifach äquivalenten Mengen dem Mikroreaktor zuführt. Dabei können sowohl Reaktionskatalysatoren als auch die in klassischen Pigmentherstellungsverfahren verwendeten Hilfsmittel, wie Harze, Tenside und andere Additive ebenfalls in dem erfindungsgemäßen Verfahren eingesetzt werden.

Die erfindungsgemäß hergestellten Disazokondensationspigmente entsprechen den Formeln (1) oder (2) 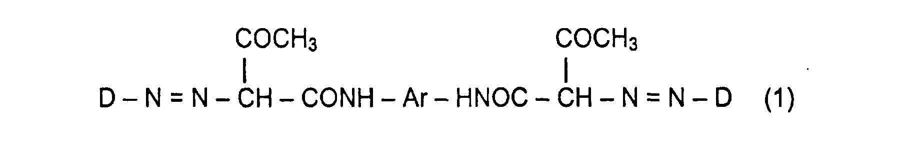 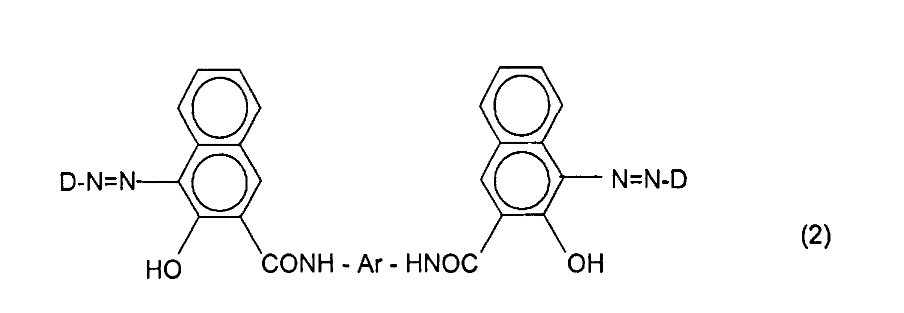 worin
D ein Rest einer Diazokomponente und
Ar ein aromatischer Rest bedeuten.

Der Rest D bedeutet beispielsweise ein Rest der Formel (a) oder (b) 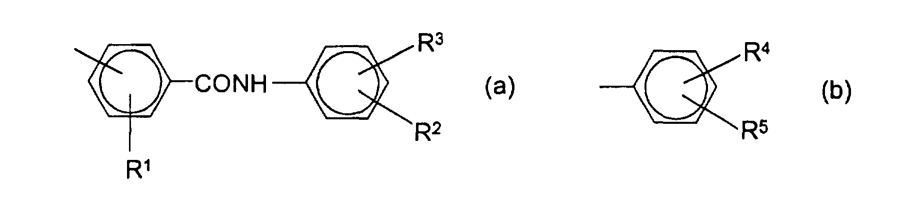 worin
R¹, R² und R³ gleich oder verschieden sind und die Bedeutung Wasserstoff, Methyl, Chlor, CF₃ oder 4'-Chlorphenoxy haben;
R⁴ und R⁵ gleich oder verschieden sind und Wasserstoff, Chlor, Methyl, CF₃, COOCH₂CH₂Cl, COO(C₁-C₄)alkyl oder Nitro bedeuten.

Der Rest Ar bedeutet beispielsweise:
1,4-Phenylen, 2-Chloro-5-methyl-1,4-phenylen, 2,5-Dichloro-1,4-phenylen, 2,5-Dimethyl-1,4-phenylen, 2-Chloro-1,4-phenylen, 2,2'-Dichlor-1,4-biphenylen, Benzanilid-4,4'-diyl, 1,4-Biphenylen und 1,4-Naphthylen.

Beispiele für Diazokomponenten sind: 2-Chloranilin, 2,5-Dichloranilin, 2,3-Dichloranilin, 2-Nitro-4-chloranilin, 2-Chlor-5-trifluormethylanilin, 3-Amino-4-chlorbenzoesäureisopropylester, 3-Amino-4-methyt-benzoesäure-(2-chlorethyl)-ester, 2-Amino-terephthalsäurediisopropylester; 3-Amino-4-chlor-benzoesäure.

Beispiele für Kupplungskomponenten sind: 2-Hydroxynaphthalin-3-carbonsäure; 1-Chlor-2,5-bisacetoacetylamino-4-methylbenzol, 1,4-Dichlor-2,5-bisacetoacetylamino-benzol und 1,4-Dimethyl-2,5-bisacetoacetylamino-benzol.

Als Disazokondensationspigmente kommen insbesondere C.I. Pigment Yellow 93, 94, 95, 128, 166; C.I. Pigment Orange 31, 55; C.I. Pigment Red 139, 140, 141, 143, 144, 166, 214, 217, 218, 220, 221, 242, 248, 262; C.I. Pigment Brown 23 und 42 in Betracht.

Die Diazotierung der Diazokomponente kann nach üblichen Methoden erfolgen.
Im Falle, dass die Diazotierung im Mikroreaktor durchgeführt wird, wird das zu diazotierende Amin oder dessen Ammoniumsalz, vorzugsweise dessen Hydrochlorid oder Sulfat, vorzugsweise in Wasser und/oder einem organischen Lösemittel gelöst oder suspendiert und die erhaltene Lösung oder Suspension kontinuierlich in den Mikroreaktor eingeleitet (Eduktstrom A).
Gleichzeitig wird eine Lösung oder Suspension, vorzugsweise eine wässrige Lösung oder Suspension, eines Diazotierungsmittels, vorzugsweise NaNO₂ oder Nitrosylschwefelsäure, kontinuierlich in den Mikroreaktor eingeleitet (Eduktstrom B). Im Innern des Mikroreaktors werden Eduktstrom A und B kontinuierlich miteinander vermischt und zu einem Diazoniumsalz umgesetzt.

Die Azokupplung mit der vorstehend definierten Kupplungskomponente kann nach üblichen Methoden erfolgen.
Im Falle, dass die Azokupplung im Mikroreaktor durchgeführt wird, wird eine Lösung oder Suspension eines Diazoniumsalzes (Eduktstrom C) und eine Lösung oder Suspension einer Kupplungskomponente (Eduktstrom D) kontinuierlich in den Mikroreaktor eingeleitet, dort miteinander kontinuierlich vermischt und zur Reaktion gebracht.

Die Azokupplung erfolgt vorzugsweise in wässriger Lösung, es können aber auch organische Lösungsmittel, gegebenenfalls im Gemisch mit Wasser verwendet werden, beispielsweise aromatische Kohlenwasserstoffe, Chlorkohlenwasserstoffe, Glykolether, Nitrile, Ester, Dimethylformamid, Dimethylacetamid, Tetramethylharnstoff und N-Methylpyrrolidon.

Aus der Azokupplung entsteht eine Azocarbonsäure oder Azodicarbonsäure, die im nächsten Schritt in ein Azocarbonsäurechlorid oder Azodicarbonsäuredichlorid überführt wird.
Im Falle, dass die Säurechloridbildung im Mikroreaktor durchgeführt wird, wird die Azocarbonsäure oder Azodicarbonsäure vorzugsweise in einem inerten organischen Lösemittel, beispielsweise Chlorbenzol, Dichlorbenzol oder Nitrobenzol gelöst oder suspendiert und die erhaltene Lösung oder Suspension kontinuierlich in den Mikroreaktor eingeleitet (Eduktstrom E). Gleichzeitig wird ein anorganisches Säurechlorid, vorzugsweise Thionylchlorid, gegebenenfalls verdünnt im gleichen Lösungsmittel wie das Säurechlorid, kontinuierlich in den Mikroreaktor eingeleitet (Eduktstrom F). Im Innern des Mikroreaktors werden Eduktstrom E und F kontinuierlich miteinander vermischt und zur Reaktion gebracht.

Im nächsten Schritt werden etwa 2 Equivalente des Azocarbonsäurechlorids mit etwa einem Equivalent eines aromatischen Diamins der Formel H₂N-Ar-NH₂, oder etwa ein Equivalent des Azodicarbonsäuredichlorids mit etwa 2 Equivalenten eines aromatischen Amins der Formel H₂N-Ar', worin Ar' z.B. 2-Methyl-3-chlorphenyl, 2-Methyl-5-chlorphenyl oder 2-(4'-chlorphenoxy)-5-trifluormethyl-phenyl bedeutet, kondensiert. Die Kondensationsreaktion erfolgt vorzugsweise in einem inerten organischen Lösemittel, vorzugsweise im gleichen Lösungsmittel wie die Carbonsäurechlorid-bildung, beispielsweise in Dichlorbenzol.
Zur erfindungsgemäßen Durchführung der Kondensationsreaktion wird eine Lösung oder Suspension des Azocarbonsäurechlorids oder Azodicarbonsäuredichlorids (Eduktstrom G) und eine Lösung oder Suspension des aromatischen Diamins oder aromatischen Amins (Eduktstrom H) kontinuierlich in den Mikroreaktor eingeleitet, dort miteinander kontinuierlich vermischt und zur Reaktion gebracht.

Im Sinne der vorliegenden Erfindung können die vier Schritte Diazotierung, Azokupplung, Säurechloridbildung und Kondensation jeweils in (hintereinandergeschalteten) Mikroreaktoren durchgeführt werden, oder einer, zwei oder drei dieser Schritte werden auf herkömmlichem Wege durchgeführt . Beispielsweise wird nur die Kondensationsreaktion im Mikroreaktor durchgeführt, oder die Säurechloridbildung wird im Mikroreaktor und die Kondensation auf herkömmlichen Wege durchgeführt.
Es können auch Mikroreaktoren mit zwei oder mehreren Reaktionszonen für die einzelnen Reaktionsschritte verwendet werden.

Im Anschluss an die genannten Verfahrenschritte kann eine Nachbehandlung des Disazokondensationspigmentes durch Erhitzen in der Reaktionssuspension oder ggf. nach Zwischenisolierung im gleichen oder einem anderen Lösemittel erfolgen.

Ein Mikroreaktor ist aus mehreren aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um chemische Reaktionen auszuführen. Es ist wenigstens ein durch das System hindurchführender Kanal enthalten, der mit dem Einlass und dem Auslass verbunden ist.

Die Flussraten der Materialströme sind apparativ limitiert, beispielsweise durch die sich je nach geometrischer Auslegung des Mikroreaktors einstellenden Drücke. Es ist wünschenswert, dass die Reaktion im Mikroreaktor vollständig abläuft, es kann sich aber auch eine Verweilzone anschließen, um eine gegebenenfalls erforderliche Verweilzeit zu schaffen.

Die Flussraten sind zweckmäßigerweise zwischen 0,05 ml/min und 5 l/min, bevorzugt zwischen 0,05 ml/min und 500 ml/min, besonders bevorzugt zwischen 0,05 ml/min und 250 ml/min, und insbesondere zwischen 0,1 ml/min und 100 ml/min.

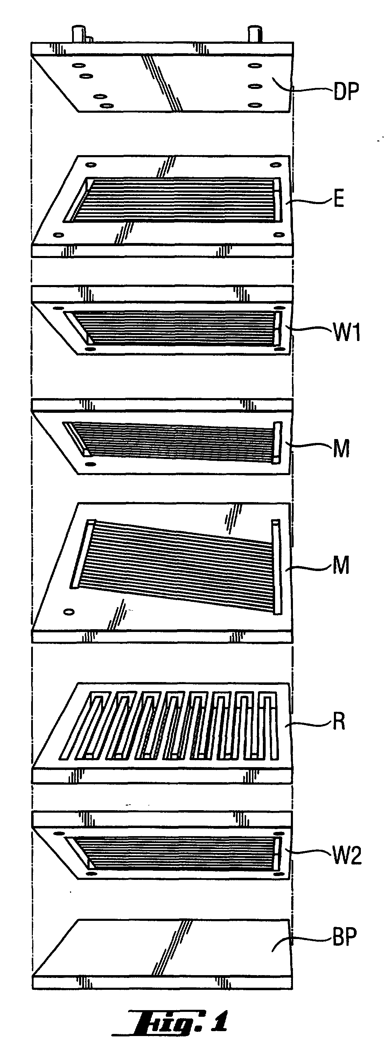

Beispielhaft wird in Figur 1 ein für die Herstellung von Disazokondensationspigmenten einsetzbarer Mikroreaktor beschrieben.
Das vorliegende Mikroreaktionssystem ist ein aus sechs, aufeinander gestapelten und miteinander verbundenen mikrostrukturierten Blechlagen und je einer Deckelplatte (DP) und Bodenplatte (BP) aufgebautes verfahrenstechnisches Modul, das durch den Zusammenbau unter Druck gehalten oder fest verbunden wird, um Abdichtflächen zwischen den Platten zusammenzupressen.

Das vorliegende Mikroreaktionssystem beinhaltet zwei Wärmetauscher für Kühlund/oder Heizmedium, eine Mischzone für die Vermischung der Reaktanden sowie eine kurze Verweilstrecke.
Mit Hilfe des Wärmetauschers (W1) werden die in Platte (E) getrennt einströmenden Eduktströme vortemperiert. In den Platten (M), die ein gemeinsames Volumen bilden, findet dann die Vermischung der Eduktströme statt. In der Verweilzone (R) wird das Reaktionsgemisch mit Hilfe des Wärmetauschers (W2) auf die gewünschte Reaktionstemperatur gebracht, so dass die gewünschte chemische Reaktion stattfinden kann.
Das Mikroreaktionssystem wird kontinuierlich betrieben, wobei sich die jeweils miteinander zur Vermischung gebrachten Fluidmengen im Mikro- (µl) bis Milliliter (ml) -Bereich bewegen.
Entscheidend für die Herstellung von Disazokondensationspigmenten in diesem Mikroreaktionssystem sind die Dimensionen der mikrostrukturierten Bereiche innerhalb des Reaktors. Diese müssen so groß gewählt sein, dass insbesondere Feststoffteilchen problemlos passieren können und so keine Verstopfung der Kanäle auftritt. Die kleinste lichte Weite der Mikrostrukturen sollte ca. zehnmal größer sein als der Durchmesser der größten Pigmentteilchen. Weiterhin muss durch entsprechende geometrische Gestaltung Sorge getragen werden, dass keine Totwasserzonen, wie z.B. Sackgassen oder scharfe Ecken, in denen z.B. Pigmentteilchen sedimentieren können, vorhanden sind. Bevorzugt sind daher kontinuierliche Bahnen ohne Ecken oder mit runden Ecken. Die Strukturen müssen klein genug sein, um die immanenten Vorteile der Mikroreaktionstechnik auszunutzen, nämlich hervorragende Wärmekontrolle, laminare Strömung, diffusives Mischen und geringes internes Volumen.

Die lichte Weite der lösungs- oder suspensionsführenden Kanäle beträgt zweckmäßigerweise 5 bis 10000 µm, vorzugsweise 5 bis 2000 µm, besonders bevorzugt 10 bis 800 µm, insbesondere 20 bis 700 µm.
Die lichte Weite der Wärmetauscherkanäle richtet sich in erster Linie nach der lichten Weite der flüssigkeits- oder suspensionsführenden Kanälen und ist zweckmäßigerweise kleiner oder gleich 10000 µm, vorzugsweise kleiner oder gleich 2000 µm, insbesondere kleiner oder gleich 800 µm. Die Untergrenze der lichten Weite der Wärmetauscherkanäle ist unkritisch und wird allenfalls durch den Druckanstieg der zu pumpenden Wärmetauscherflüssigkeit und von der Notwendigkeit der optimalen Wärmezufuhr oder -abfuhr begrenzt.

Die Dimensionen des verwendeten Mikroreaktionssystems sind:

| | |
|---|---|
| Wärmetauscherstrukturen | Kanalbreite ∼600 µm |
| | Kanalhöhe ∼250 µm |
| | |
| Mischer und Verweilzeit | Kanalbreite ∼600 µm |
| | Kanalhöhe ∼500 µm |

Die sechs aufeinanderliegenden und dicht miteinander verbundenen Blechlagen werden vorzugsweise von oben mit allen Wärmetauscherfluiden und Reaktanden beschickt. Die Abfuhr des Produktes und der Wärmertauscherfluide erfolgt vorzugsweise ebenfalls nach oben. Die eventuelle Zufuhr dritter und vierter an der Reaktion beteiligter Flüssigkeiten, z.B. Katalysatoren bei der Säurechloridbildung, wird über eine direkt vor dem Reaktor befindliche T-Verzweigung realisiert, d.h. jeweils ein Reaktant kann vorab mit den anderen an der Reaktion beteiligten Flüssigkeiten vermischt werden. Die Kontrolle der benötigten Konzentrationen und Flüsse wird vorzugsweise über Präzisionskolbenpumpen und einer computergesteuerten Regelung vorgenommen. Die Reaktionstemperatur wird über integrierte Sensoren überwacht und mit Hilfe der Regelung und eines Thermostaten/Cryostaten überwacht und gesteuert.

Die Herstellung von Mischungen von Einsatzstoffen zu Materialströmen kann auch vorher in Mikromischern oder in vorgeschalteten Vermischungszonen stattfinden. Es können auch Einsatzstoffe in nachgeschalteten Vermischungszonen oder in nachgeschalteten Mikromischern oder -reaktoren zudosiert werden.

Das hier verwendete System ist aus Edelstahl gefertigt; andere Materialien wie zum Beispiel Glas, Keramik, Silizium, Kunststoffe oder andere Metalle sind ebenso einsetzbar.

Für Diazotierungen werden Temperaturen von -10 bis + 80°C, vorzugsweise von -5 bis + 30°C, angestrebt, für Azokupplungen von 0 bis 90°C, vorzugsweise von 10 bis 60°C.
Für die Diazotierungsreaktion als auch für die Azokupplung können den Eduktströmen Pufferlösungen zugeführt werden, vorzugsweise von organischen Säuren und deren Salzen, z.B. Essigsäure/Acetat-Puffer, Zitronensäure/Citrat-Puffer, oder von anorganischen Säuren und deren Salzen, wie z.B. Phosphorsäure/Phosphat oder Kohlensäure/Carbonat.

Für die Bildung des Azocarbonsäurechlorids oder Azodicarbonsäuredichlorids werden Temperaturen von 20 bis 160°C, vorzugsweise von 80°C bis 120°C, für die Kondensation werden Temperaturen von 20 bis 250°C, vorzugsweise von 80 bis 200°C angestrebt.
Für die Säurechloridbildung als auch für die Kondensation können den Eduktströmen Lösungen zugeführt werden, die vorzugsweise Reaktionskatalysatoren, wie beispielsweise bei der Säurechloridbildung N,N-Dimethylformamid oder Pyridin, enthalten.

Durch das erfindungsgemäße Verfahren lassen sich hohe Reaktionsgeschwindigkeiten durch signifikant höhere Reaktionstemperaturen als vergleichsweise im Batchverfahren erzielen. Ein weiterer Vorteil ist die Unterdrückung unvollständiger Reaktionen, die zu einem erhöhten Anteil an Monoazoverbindungen im Endprodukt führen. Durch die hohe Wärmeübertragungsrate während der kurzen Verweilzeit im Mikro- bzw. Minireaktor kann eine kurze thermische Belastung der Reaktanden in einem eng definierten Zeitfenster realisiert werden.
Nach dem erfindungsgemäßen Verfahren lassen sich Disazokondensationspigmente herstellen. Es können auch Gemische von Disazokondensationspigmenten hergestellt werden.

Es war überraschend und nicht vorhersehbar, dass die Herstellung von Disazokondensationspigmenten in dieser technisch eleganten Weise möglich ist, da bei einem Anfall von Feststoff im Mikroreaktor bislang davon ausgegangen wurde, dass das System verstopft.

Die erfindungsgemäß hergestellten Disazokondensationspigmente lassen sich zum Pigmentieren von hochmolekularen organischen Materialien natürlicher oder synthetischer Herkunft einsetzen, z. B. von Kunststoffen, Harzen, Lacken, Anstrichfarben oder elektrophotographischen Tonern und Entwicklern, sowie von Tinten und Druckfarben.

### Beispiele

### Beispiel 1: Herstellung von C.I. Pigment Red 214:

### a) Herstellung des Säurechlorids

36,1 g der trockenen Monoazocarbonsäure, erhalten durch konventionelle Batch-Kupplung oder Kupplung im Mikroreaktor von konventionell oder im Mikroreaktor diazotiertem 2,5-Dichloranilin und 2-Hydroxynaphthalin-3-carbonsäure, werden in 280 ml 1,2-Dichlorbenzol und 18 g Thionylchlorid 4 h unter Rühren bei 110°C erhitzt. Dann wird auf 80°C abgekühlt und überschüssiges Thionylchlorid, zusammen mit wenig 1,2-Dichlorbenzol im Vakuum abdestilliert.

### b) Kondensation im Mikroreaktor

Die aus a) erhaltene Suspension des Säurechlorids wird mit 1,2-Dichlorbenzol auf ein Volumen von 300 ml eingestellt und bei 80°C gerührt. 8,9 g 1,4-Diamino-2,5-dichlorbenzol werden in 200 ml 1,2-Dichlorbenzol gelöst, anschließend wird das Volumen mit 1,2-Dichlorbenzol auf 300 ml eingestellt und die Lösung bei 80°C gerührt. Dann werden über kalibrierte Kolbenpumpen mit einer Flussrate von jeweils 6 ml/min in die jeweiligen Edukteingänge des Mikroreaktors die Suspension des Säurechlorids und die Lösung des Diamins gepumpt. Die eigentliche Kondensationsreaktion findet im Reaktorraum statt. An dem Wärmetauscher-Kreislauf des Mikroreaktors ist ein Thermostat angeschlossen, der eine Reaktionstemperatur von 180°C einstellt. Die aus dem Reaktor austretende Pigmentsuspension wird in einem Kolben gesammelt, abgesaugt mit heißem 1,2-Dichlorbenzol, dann mit Methanol und zuletzt mit Wasser gewaschen und im Vakuum bei 80°C getrocknet.

### Beispiel 2: Herstellung von C.I. Pigment Red 214

### a) Herstellung des Säurechlorids im Mikroreaktor

36,1 g der trockenen Monoazocarbonsäure, erhalten durch konventionelle Batch-Kupplung oder Kupplung im Mikroreaktor von konventionell oder im Mikroreaktor diazotiertem 2,5-Dichloranilin und 2-Hydroxynaphthalin-3-carbonsäure, werden in 250 ml 1,2-Dichlorbenzol suspendiert, die Suspension wird mit 1,2-Dichlorbenzol auf 300 ml eingestellt. Diese Suspension wird über eine kalibrierte Kolbenpumpen mit einer Flussrate von 6 ml/min über den Edukteingang A) des Mikroreaktors gepumpt. 18 g Thionylchlorid werden mit 1,2-Dichlorbenzol auf ein Volumen von 150 ml eingestellt und parallel über eine kalibrierte Kolbenpumpe mit einer Flussrate von 3 ml/min in den Edukteingang B) des Mikroreaktors gepumpt. Die eigentliche Säurechloridbildung findet im Reaktorraum statt. An dem Wärmetauscher-Kreislauf des Mikroreaktors ist ein Thermostat angeschlossen, der eine Reaktionstemperatur von 120°C einstellt Die aus dem Reaktor austretende Produkt-Suspension wird in einem Kolben gesammelt, überschüssiges Thionylchlorid wird im Vakuum abdestilliert.

### b) Kondensation im Mikroreaktor

Identisch mit Beispiel 1b).

### Beispiel 3: Herstellung von C.I. Pigment Yellow 93

### a) Herstellung des Säurechlorids im Mikroreaktor

34,5 g der trockenen Disazodicarbonsäure, erhalten durch konventionelle Batch-Kupplung oder Kupplung im Mikroreaktor von 2 Äquivalenten diazotierter 3-Amino-4-chlorbenzoesäure und 1 Äquivalent 1-Chlor-2,5-bisacetoacetylamino-4-methylbenzol, werden in 1,2-Dichlorbenzol suspendiert, das Volumen wird dabei auf 300 ml eingestellt. Diese Suspension wird über eine kalibrierte Kolbenpumpen mit einer Flussrate von 6 ml/min über den Edukteingang A des Mikroreaktors gepumpt. 18 g Thionylchlorid werden mit 1,2-Dichlorbenzol auf ein Volumen von 150 ml eingestellt und parallel über eine kalibrierte Kolbenpumpe mit einer Flussrate von 3 ml/min in den Edukteingang B des Mikroreaktors gepumpt. Die eigentliche Säurechloridbildung findet im Reaktorraum statt. An dem Wärmetauscher-Kreislauf des Mikroreaktors ist ein Thermostat angeschlossen, der eine Reaktionstemperatur von 110°C einstellt. Die aus dem Reaktor austretende Produkt-Suspension wird gesammelt und auf 80°C abgekühlt, dann wird überschüssiges Thionylchlorid, zusammen mit wenig 1,2-Dichlorbenzol im Vakuum abdestilliert. Am Ende wird mit 1,2-Dichlorbenzol auf ein Volumen von 300 ml eingestellt.

### b) Kondensation mit 3-Chlor-2-methylanilin im Mikroreaktor

Die aus a) erhaltene Suspension des Säurechlorids und 14,2 g 3-Chlor-2-methylanilin, gelöst in 300 ml 1,2-Dichlorbenzol werden jeweils auf 80°C erhitzt und über kalibrierte Kolbenpumpen mit einer Flussrate von jeweils 6 ml/min in die jeweiligen Edukteingänge des Mikroreaktors gepumpt. Die eigentliche Kondensationsreaktion findet im Reaktorraum statt. An dem Wärmetauscher-Kreislauf des Mikroreaktors ist ein Thermostat angeschlossen, der eine Reaktionstemperatur von 180°C einstellt. Die aus dem Reaktor austretende Pigmentsuspension wird in einem Kolben gesammelt, abgesaugt, mit heißem 1,2-Dichlorbenzol, anschließend mit Methanol und zuletzt mit Wasser gewaschen und im Vakuum bei 80°C getrocknet.

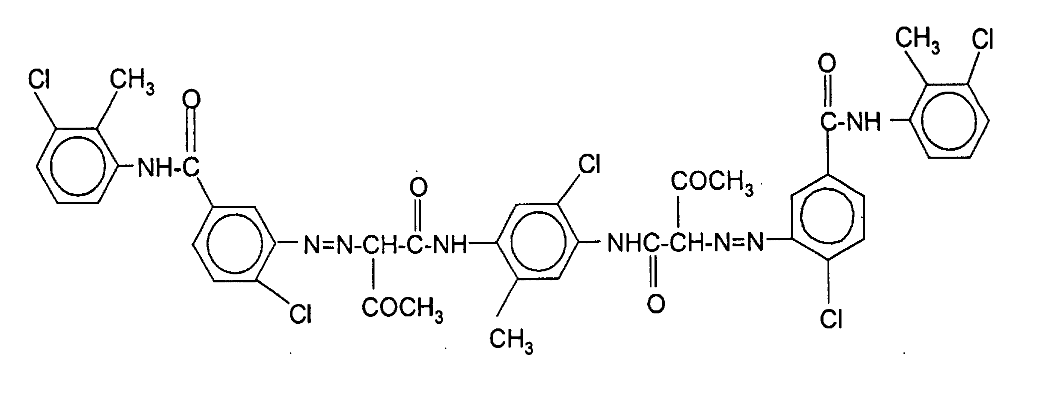

## Patentansprüche

1. Verfahren zur Herstellung von Disazokondensationspigmenten durch Diazotierung eines aromatischen Amins, Azokupplung mit einer Kupplungskomponente zu einer Azocarbonsäure oder Azodicarbonsäure, Bildung eines Azocarbonsäurechlorids oder Azodicarbonsäuredichlorids, und Kondensation des Azocarbonsäurechlorids mit einem aromatischen Diamin oder des Azodicarbonsäuredichlorids mit einem aromatischen Amin, **dadurch gekennzeichnet, dass** man die Säurechloridbildung und/oder die Kondensation, und ggf. die Diazotierung und ggf. die Azokupplung, in einem Mikroreaktor durchführt.

2. Verfahren nach Anspruch 1, **dadurch gekennzeichnet, dass** das Disazokondensationspigment eine Verbindung der Formel (1) oder (2) ist 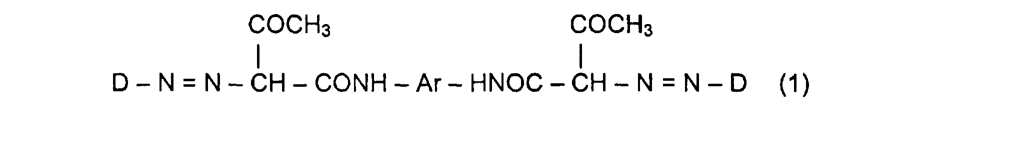 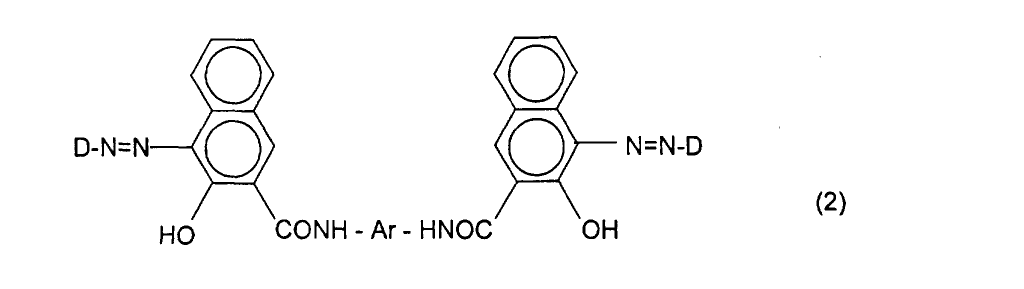 worin
D ein Rest einer Diazokomponente und
Ar ein aromatischer Rest bedeuten.

3. Verfahren nach Anspruch 1 oder 2, **dadurch gekennzeichnet, dass**
D einen Rest der Formel (a) oder (b) bedeutet, 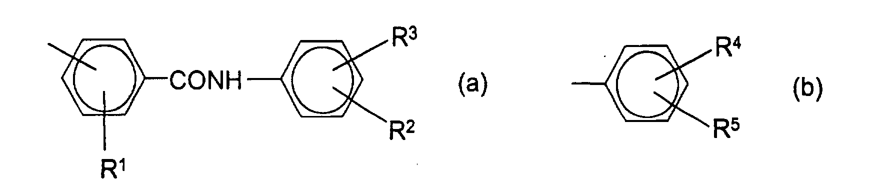 worin
R¹, R² und R³ gleich oder verschieden sind und die Bedeutung Wasserstoff, Methyl, Chlor, CF₃ oder 4'-Chlorphenoxy haben;
R⁴ und R⁵ gleich oder verschieden sind und Wasserstoff, Chlor, Methyl, CF₃, COOCH₂CH₂Cl, COO(C₁-C₄)alkyl oder Nitro bedeuten.

4. Verfahren nach mindestens einem der Ansprüche 1 bis 3, **dadurch gekennzeichnet, dass**
Ar 1,4-Phenylen, 2-Chloro-5-methyl-1,4-phenylen, 2,5-Dichloro-1,4-phenylen, 2,5-Dimethyl-1,4-phenylen, 2-Chloro-1,4-phenylen, 2,2'-Dichlor-1,4-biphenylen Benzanilid-4,4'-diyl, 1,4-Biphenlen oder 1,4-Naphthylen bedeutet.

5. Verfahren nach mindestens einem der Ansprüche 1 bis 4, **dadurch gekennzeichnet, dass** das Disazokondensationspigment C.I. Pigment Yellow 93, 94, 95, 128, 166; C.I. Pigment Orange 31, 55; C.I. Pigment Red 139, 140, 141, 143, 144, 166, 214, 217, 218, 220, 221, 242, 248, 262; C.I. Pigment Brown 23 oder 42 ist.

6. Verfahren nach mindestens einem der Ansprüche 1 bis 5, **dadurch gekennzeichnet, dass** die Diazotierung im Mikroreaktor durchgeführt wird, indem man das zu diazotierende Amin oder dessen Ammoniumsalz, sowie eine Lösung oder Suspension eines Diazotierungsmittels kontinuierlich in den Mikroreaktor einleitet, im Innern des Mikroreaktors kontinuierlich miteinander vermischt und zur Reaktion bringt.

7. Verfahren nach mindestens einem der Ansprüche 1 bis 6, **dadurch gekennzeichnet, dass** die Azokupplung im Mikroreaktor durchgeführt wird, indem man eine Lösung oder Suspension eines kupplungsfähigen Diazoniumsalzes, sowie eine Lösung oder Suspension einer Azokupplungskomponente kontinuierlich in den Mikroreaktor einleitet, im Innern des Mikroreaktors kontinuierlich miteinander vermischt und zur Reaktion bringt.

8. Verfahren nach mindestens einem der Ansprüche 1 bis 7, **dadurch gekennzeichnet, dass** die Säurechloridbildung im Mikroreaktor durchgeführt wird, indem man eine Lösung oder Suspension einer Azocarbonsäure oder einer Azodicarbonsäure in einem organischen Lösemittel, sowie ein anorganisches Säurechlorid kontinuierlich in den Mikroreaktor einleitet, im Innern des Mikroreaktors kontinuierlich miteinander vermischt und zur Reaktion bringt.

9. Verfahren nach mindestens einem der Ansprüche 1 bis 8, **dadurch gekennzeichnet, dass** die Kondensationsreaktion im Mikroreaktor durchgeführt wird, indem man eine Lösung oder Suspension eines Azocarbonsäurechlorids oder Azocarbondisäuredichlorids, und eine Lösung oder Suspension eines aromatischen Diamins oder aromatischen Amins kontinuierlich in den Mikroreaktor einleitet, im Innern des Mikroreaktors kontinuierlich miteinander vermischt und zur Reaktion bringt.

10. Verfahren nach mindestens einem der Ansprüche 1 bis 9, **dadurch gekennzeichnet, dass** man zur Durchführung von zwei oder mehreren der Schritte Diazotierung, Azokupplung, Säurechloridbildung und Kondensationsreaktion zwei oder mehrere Mikroreaktoren hintereinanderschaltet oder Mikroreaktoren mit zwei oder mehreren Reaktionszonen verwendet.

11. Verfahren nach mindestens einem der Ansprüche 1 bis 10, **dadurch gekennzeichnet, dass** die eingeleiteten Lösungen oder Suspensionen im Innern des Mikroreaktors mit Hilfe eines oder mehrerer Wärmetauscher auf Reaktionstemperatur gebracht werden.

12. Verfahren nach mindestens einem der Ansprüche 1 bis 11, **dadurch gekennzeichnet, dass** die Konzentrationen, Flussraten und Temperaturen über im Mikroreaktor integrierte Sensoren und Regelkreise erfasst und kontrolliert werden.

## Claims

1. A process for preparing disazo condensation pigments by diazotization of an aromatic amine, azo coupling with a coupling component to form an azocarboxylic acid or azodicarboxylic acid, formation of an azocarbonyl chloride or azodicarbonyl dichloride and condensation of the azocarbonyl chloride with an aromatic diamine or of the azodicarbonyl dichloride with an aromatic amine, which comprises effecting the acyl chloride formation and/or the condensation and optionally the diazotization and optionally the azo coupling in a microreactor.

2. The process of claim 1 wherein the disazo condensation pigment is a compound of formula (1) or (2) 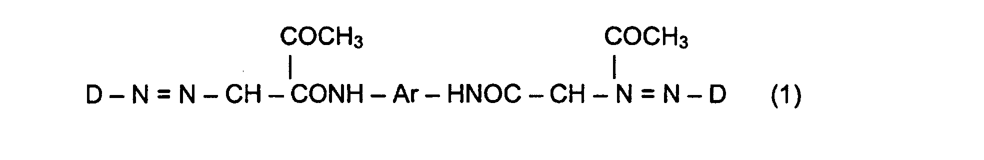 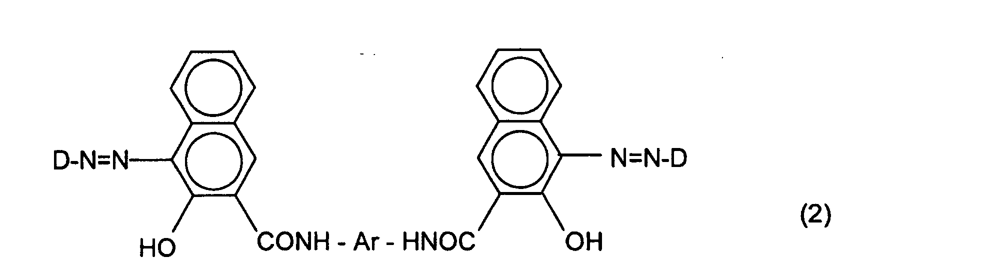 where
D is a radical of a diazo component and
Ar is an aromatic radical.

3. The process of claim 1 or 2 wherein
D is a radical of the formula (a) or (b) 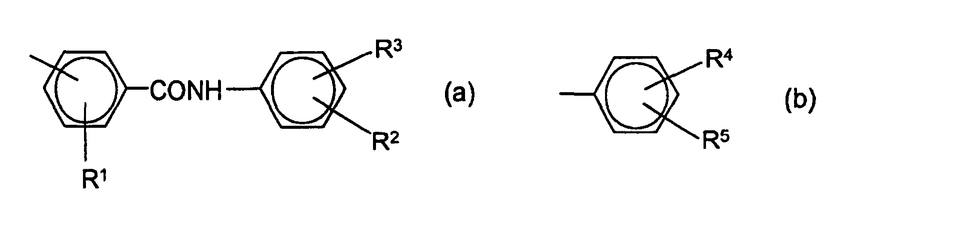 where
R¹, R² and R³ are identical or different and are each selected from the group consisting of hydrogen, methyl, chlorine, CF₃ and 4'-chlorophenoxy;
R⁴ and R⁵ are identical or different and are each selected from the group of hydrogen, chlorine, methyl, CF₃, COOCH₂CH₂Cl, COO(C₁-C₄)alkyl and nitro.

4. The process of at least one of claims 1 to 3 wherein
Ar is 1,4-phenylene, 2-chloro-5-methyl-1,4-phenylene, 2,5-dichloro-1,4-phenylene,
2,5-dimethyl-1,4-phenylene, 2-chloro-1,4-phenylene, 2,2'-dichloro-1,4-biphenylene,
benzanilide-4,4'-diyl, 1,4-biphenylylene or 1,4-naphthylene.

5. The process of at least one of claims 1 to 4 wherein the disazo condensation pigment is C.I. Pigment Yellow 93, 94, 95, 128, 166; C.I. Pigment Orange 31, 55; C.I. Pigment Red 139, 140, 141, 143, 144, 166, 214, 217, 218, 220, 221, 242, 248, 262; C.I. Pigment Brown 23 or 42.

6. The process of at least one of claims 1 to 5 wherein the diazotization is effected in the microreactor by the amine to be diazotized or its ammonium salt and also a solution or suspension of a diazotizing agent being continuously introduced into the microreactor and continuously mixed with each other and reacted in the microreactor.

7. The process of at least one of claims 1 to 6 wherein the azo coupling is effected in the microreactor by a solution or suspension of a coupleable diazonium salt and also a solution or suspension of an azo coupling component being continuously introduced into the microreactor and continuously mixed with each other and reacted in the microreactor.

8. The process of at least one of claims 1 to 7 wherein the acyl chloride formation is effected in the microreactor by a solution or suspension of an azocarboxylic acid or of an azodicarboxylic acid in an organic solvent and also an inorganic acyl chloride being continuously introduced into the microreactor and continuously mixed with each other and reacted in the microreactor.

9. The process of at least one of claims 1 to 8 wherein the condensation reaction is effected in the microreactor by a solution or suspension of an azocarbonyl chloride or of an azodicarbonyl dichloride and a solution or suspension of an aromatic diamine or of an aromatic amine being continuously introduced into the microreactor and continously mixed with each other and reacted in the microreactor.

10. The process of at least one of claims 1 to 9 wherein two or more of diazotization, azo coupling, acyl chloride formation and condensation reaction are effected using two or more microreactors connected in series or microreactors having two or more reaction zones.

11. The process of at least one of claims 1 to 10 wherein the introduced solutions or suspensions are brought to the reaction temperature in the microreactor by means of one or more heat exchangers.

12. The process of at least one of claims 1 to 11 wherein the concentrations, flow rates and temperatures are captured and controlled via sensors and control circuits integrated in the microreactor.

## Revendications

1. Procédé de préparation de pigments de condensation disazoïque au moyen de la diazotation d'une amine aromatique, d'une copulation azoïque avec un composant de copulation pour former un acide azocarboxylique ou un acide azodicarboxylique, de la formation d'un chlorure d'acide azocarboxylique ou d'un dichlorure d'acide azodicarboxylique et de la condensation du chlorure d'acide azocarboxylique avec une diamine aromatique ou du dichlorure d'acide azodicarboxylique avec une amine aromatique, **caractérisé en ce que** l'on réalise la formation du chlorure d'acide et/ou la condensation, et éventuellement la diazotation et éventuellement la copulation azoïque, dans un microréacteur.

2. Procédé selon la revendication 1, **caractérisé en ce que** le pigment de condensation disazoïque est un composé de formule (1) ou (2) 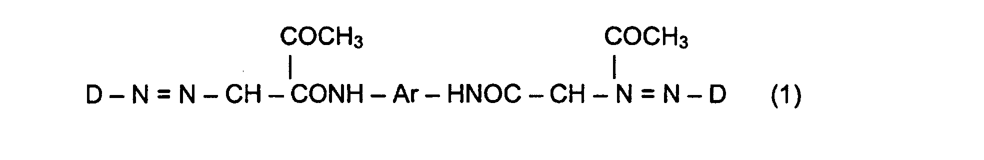 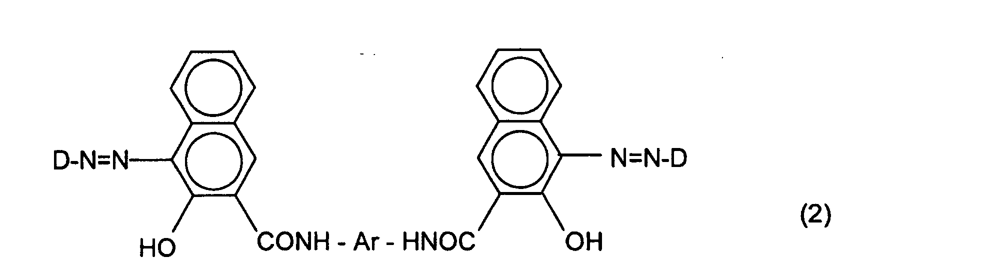 dans lesquelles
D représente un groupe d'un composant diazoïque et
Ar représente un groupe aromatique.

3. Procédé selon la revendication 1 ou 2,
**caractérisé en ce que** D représente un groupe de formule (a) ou (b) 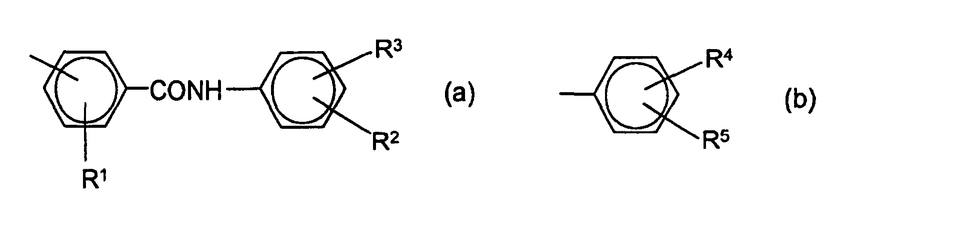 dans lesquelles
R¹, R² et R³ sont identiques ou différents et représentent un atome d'hydrogène, un groupe méthyle, un atome de chlore, un groupe CF₃ ou 4'-chlorophénoxy ;
R⁴ et R⁵ sont identiques ou différents et représentent un atome d'hydrogène, un atome de chlore, un groupe méthyle, CF₃, COOCH₂CH₂Cl, COO(alkyle en C₁ à C₄) ou nitro.

4. Procédé selon au moins l'une quelconque des revendications 1 à 3, **caractérisé en ce que**
Ar représente un groupe 1,4-phénylène, 2-chloro-5-méthyl-1,4-phénylène, 2,5-dichloro-1,4-phénylène, 2,5-diméthyl-1,4-phénylène, 2-chloro-1,4-phénylène, 2,2'-dichloro-1,4-biphénylène, benzanilid-4,4'-diyle, 1,4-biphénylène ou 1,4-naphtylène.

5. Procédé selon au moins l'une quelconque des revendications 1 à 4, **caractérisé en ce que** le pigment de condensation disazoïque est C.I. Pigment Yellow 93, 94, 95, 128, 166 ; C.I. Pigment Orange 31, 55 ; C.I. Pigment Red 139, 140, 141, 143, 144, 166, 214, 217, 218, 220, 221, 242, 248, 262 ; C.I. Pigment Brown 23 ou 42.

6. Procédé selon au moins l'une quelconque des revendications 1 à 5, **caractérisé en ce que** l'on réalise la diazotation dans le microréacteur en introduisant en continu dans le microréacteur l'amine à diazoter ou son sel d'ammonium, ainsi qu'une solution ou une suspension d'un agent de diazotation, en les mélangeant en continu à l'intérieur du microréacteur et en les faisant réagir.

7. Procédé selon au moins l'une quelconque des revendications 1 à 6, **caractérisé en ce que** l'on réalise la copulation azoïque dans le microréacteur en introduisant en continu dans le microréacteur une solution ou une suspension d'un sel de diazonium, ainsi qu'une solution ou une suspension d'un composant de copulation azoïque, en les mélangeant en continu à l'intérieur du microréacteur et en les faisant réagir.

8. Procédé selon au moins l'une quelconque des revendications 1 à 7, **caractérisé en ce que** l'on réalise la formation du chlorure d'acide dans le microréacteur en introduisant en continu dans le microréacteur une solution ou une suspension d'un acide azocarboxylique ou d'un acide azodicarboxylique dans un solvant organique, ainsi qu'un chlorure d'acide inorganique, en les mélangeant en continu à l'intérieur du microréacteur et en les faisant réagir.

9. Procédé selon au moins l'une quelconque des revendications 1 à 8, **caractérisé en ce que** l'on réalise la réaction de condensation dans le microréacteur en introduisant en continu dans le microréacteur une solution ou une suspension d'un chlorure d'acide azocarboxylique ou d'un dichlorure d'acide azodicarboxylique et une solution ou une suspension d'une diamine aromatique ou d'une amine aromatique, en les mélangeant en continu à l'intérieur du microréacteur et en les faisant réagir.

10. Procédé selon au moins l'une quelconque des revendications 1 à 9, **caractérisé en ce que** l'on monte en série deux microréacteurs ou plus pour la réalisation de deux étapes ou plus de la diazotation, de la copulation azoïque, de la formation du chlorure d'acide et de la réaction de condensation ou **en ce que** l'on utilise des microréacteurs comprenant deux zones de réaction ou plus.

11. Procédé selon au moins l'une quelconque des revendications 1 à 10, **caractérisé en ce que** l'on porte à la température de réaction les solutions ou les suspensions introduites à l'intérieur du réacteur à l'aide d'un ou plusieurs échangeurs thermiques.

12. Procédé selon au moins l'une quelconque des revendications 1 à 11, **caractérisé en ce que** l'on détermine et l'on régule les concentrations, les débits et les températures par l'intermédiaire de capteurs et de boucles d'asservissement intégrées dans le microréacteur.
